# EUROPEAN PATENT SPECIFICATION

(11) **EP 1 250 820 B1**
(45) Date of publication and mention of the grant of the patent: **02.01.2004**
(21) Application number: 01903822.3
(22) Date of filing: 26.01.2001
(51) Int. Cl.: H04Q 7/22

(54) **ROUTING OF SHORT MESSAGES IN A TELECOMMUNICATION SYSTEM**
WEITERLEITUNG VON KURZNACHRICHTEN IN EINEM TELEKOMMUNIKATIONSSYSTEM
ACHEMINEMENT DE MESSAGES COURTS DANS UN SYSTEME DE TELECOMMUNICATIONS

(30) Priority: 27.01.2000 FI 20000164
(43) Date of publication of application: 23.10.2002
(73) Proprietor: Sonera Oyj, 00510 Helsinki (FI)
(72) Inventor: ALA-LUUKKO, Sami, FIN-00200 Helsinki (FI)
(74) Representative: Simmelvuo, Markku
(86) International application number: PCT/FI2001/000074
(87) International publication number: WO 2001/056311

(56) References cited:
- WO-A1-00/42790
- WO-A1-00/47004
- WO-A1-00/56091
- US-A- 5 946 629

## Description

The present invention relates to telecommunication systems. In particular, the invention relates to a method and a system for transmitting short messages between mobile communication systems.

The invention relates to a method for transmitting short messages between mobile communication systems in a telecommunication system comprising a first mobile communication system which is based on a first mobile communication standard; a first short message service centre which is connected to the aforementioned first mobile communication system; a second mobile communication system which is based on a second mobile communication standard; a second short message service centre which is connected to the aforementioned second mobile communication system; a home location register which is connected to the aforementioned second mobile communication system; a mobile services switching centre which is connected to the aforementioned second mobile communication system; and a gateway which combines the aforementioned first and second mobile communication system.

### BACKGROUND OF THE INVENTION

There are in the world currently several digital mobile communication systems, and they are based on different mobile communication standards. Mobile communication networks, such as GSM networks, (GSM, Global System for Mobile communications) have become very popular in a big part of the world. However, e.g. in the United States, which is, as is well known, considered to be an important country when speaking about mobile communication systems, several mobile communication standards are applied. In the United States there are currently at least two digital mobile systems; (DAMPS, Digital Advanced Mobile Phone System), which is based on the S-54 standard and which is compatible with the analogue (AMPS, Advanced Mobile Phone System) as well as a CDMA system which is based on the IS-95 standard. American mobile communication systems are in the end based on the ANSI-41 trunk network standard. Also in Japan there is an own mobile communication system which is based on its own standard (JDC, Japan Digital Cellular).

Since the introduction of the digital mobile networks, the services provided have included a short message service (SMS, Short Message Service), which has rapidly become very popular in the world. The short message service is in fact a radio paging system in which alpha numeric messages may be transmitted to the mobile subscriber, and (s)he may read these messages on the display of his/her mobile station whenever s(he) wishes so. The transmission of short messages in different standards is very similar, but they are not, however, wholly compatible. This has become a very disadvantageous situation, when one wishes to send a short message between mobile communication systems based on different standards.

A real problem has become the lacking of the roaming feature of short messages as a connective factor between different mobile communication systems.

Generally, roaming is used to mean the co-operation of operators due to which the user of the mobile station is able to establish a connection in a wider area than just one operator could offer. The operators agree on the administration and adapt the technical sectors to correspond to the requirements of the co-operation.

The roaming functionality has been known for phone calls, e.g. between the GSM operators of Europe, but the problem has become the poor compatibility of different mobile communication systems. The problem with the co-operation between operators has been the fact that different mobile communication systems are based on different standards. Previously, it has not been possible to provide the short messages with the roaming feature.

A prior art document WO 00/42790 discloses provision of voice message notifications, such as SMS messages, to a mobile subscriber regardless of the type of network in which a mobile subscriber is located. An interworking function translates a first voice message notification from a first protocol associated with a first network into a second protocol associated with a second network.

The objective of the invention is to eliminate the above-mentioned problem and to enable the offering of mobile communication services to a remarkably wider clientele than before. One specific objective of the invention is to disclose a new type of method and system that enable the offering of mobile communication services, e.g. short message services, between different mobile communication systems.

### BRIEF DESCRIPTION OF THE INVENTION

The invention enables the roaming functionality between different mobile communication systems based on different mobile communication standards by means of a separate component. In the invention, the new functionality connected with transmission of a short message is implemented by the gateway. The gateway contains such features that the standard components of a mobile communication network do not necessarily include. The invention enables one to send a short message from a system based on a different mobile communication standard to another mobile communication system.

The telecommunication system comprises a first mobile communication system which is based on a first mobile communication standard; a first short message service centre; a second mobile communication system which is based on a second mobile communication standard; a second short message service centre; a home location register; a mobile services switching centre; and a gateway which combines the aforementioned first and second mobile communication system.

When speaking about a gateway it is used to mean, e.g. a SMS roaming gateway or some corresponding network element which functions, e.g. as the transmitter between two mobile communication systems based on different standards.

In the invention in accordance with the invention, a short message is created on a terminal device and the short message is directed from the terminal device to the mobile communication system. From the first short message service centre of the mobile communication system, a routing data inquiry needed for the routing of the short message is made to the gateway. In response to the aforementioned routing data inquiries, the address of the routing gateway is received based on which the short message may be sent from the first short message service centre to the gateway to be transmitted further to the second mobile communication system.

The purpose of the routing data inquiry is to locate the subscriber in the area of another mobile communication system. It is possible that the gateway is informed of the location of the subscriber, in which case the first short message service centre receives the necessary routing data directly in the response sent by the gateway that includes the address of the gateway. In that case the operator has configured the network in such a way that there are one or more numbers of the short message service centre of the second mobile communication system corresponding to a certain numerical space saved to the first short message service centre. Because of the redundancy it is usually more preferable to use several numbers. This practise based on a predetermined numerical space may be used to implement, e.g. such a function in which the short messages of a subscriber of a certain operator are always transmitted to the short message service centre of the relevant operator. The store-and-forward functionality characteristic of a short message is in that case implemented in the short message service centre of the second mobile communication system. The store-and-forward functionality is used to mean the process when the mobile station of the receiver is e.g. not connected to the network. The sent short message is temporarily saved to the short message service centre from which it is sent after a certain period further to the recipient.

The gateway may also find out the location of the subscriber in the home location register of the other mobile communication system, after which the gateway saves this address to its database and returns its own address in response to the routing data inquiry made by the first short message service centre.

In an embodiment of the invention, the routing inquiry, i.e. the HLR inquiry, made by the first short message service centre, is transformed in the gateway into a HLR inquiry consistent with the second mobile communication standard, and the aforementioned inquiry is directed to the home location register of the second mobile communication system. The inquiry does not necessarily have to be a HLR inquiry, but it may also be some other inquiry depending on the practice of the network in question. The purpose of the inquiry is, however, to locate the mobile station in the area of another mobile communication system. The aforementioned inquiry is received into the home location register of the second mobile communication system, and the address of the second mobile services switching centre, in whose area the mobile station of the aforementioned second mobile communication system is, is returned to the gateway in the response.

Subsequently, the aforementioned address is transformed in the gateway to correspond to the first mobile communication system and the aforementioned transformed address of the gateway is sent to the short message service centre of the first mobile communication system.

According to the invention, the created short message is sent from the first short message service centre to the aforementioned gateway, and the aforementioned short message is transformed to correspond to the second mobile communication standard, and the aforementioned short message is transmitted from the gateway to the short message service centre of the second mobile communication system to be transmitted further on, or alternatively, the aforementioned short message is transmitted from the gateway to the mobile services switching centre of the second mobile communication system to be transmitted further on. After this, an acknowledgement of the transmission of the aforementioned short message is transmitted from the short message service centre of the second mobile communication system, or alternatively from the mobile services switching centre to the gateway. Also the acknowledgement has to be transformed in the gateway to correspond to the standard of the first mobile communication system, and after this the transformed acknowledgement is directed from the gateway to the first short message service centre to be transmitted further on.

In the transformation, the short message is transformed from the Mobile-Terminating form into a Mobile Originated form. There are two types of short messages. The first one is a short message terminating in a certain mobile station or originating from a mobile station, meant to a certain terminal device. The second one is a message terminating in all mobile stations in a certain area, e.g. a piece of telecommunication information or some other corresponding information. This kind of a service may be received into all mobile stations capable of receiving it, and this is the reason why the aforementioned transformation from the Mobile-Terminating form into the Mobile Originated form is done to the short message to be transmitted.

In addition, the invention relates to a system for transmitting short messages between mobile communication systems in a telecommunication system comprising a first mobile communication system which is based on a first mobile communication standard; a first short message service centre which is connected to the aforementioned first mobile communication system; a second mobile communication system which is based on a second mobile communication standard; a second short message service centre which is connected to the aforementioned second mobile communication system; a home location register which is connected to the aforementioned second mobile communication system; a mobile services switching centre which is connected to the aforementioned second mobile communication system; a gateway which combines the aforementioned first and second mobile communication system.

In addition, the telecommunication system comprises a routing component which is used to make the routing data inquiry from the first short message service centre. The short message is transmitted in response, based on the aforementioned routing data inquiry, to the second mobile communication system. The system in accordance with the invention comprises, in addition, a pointer which is used to address the routing data inquiries addressed to a certain predetermined numerical space to the gateway as well as a returner which is used to return the address of the gateway to the first short message service centre.

The system also comprises a transformer which is used to transform in the gateway the HLR inquiry made by the aforementioned first short message service centre into a HLR inquiry consistent with the second mobile communication standard, and the address of the mobile services switching centre of the second mobile communication system, which was received as a response to the inquiry and in whose area the mobile station of the aforementioned second mobile communication system is, is transformed. In this aforementioned transformation in which the address is transformed to correspond to the first mobile communication standard, the address of the gateway is attached to the transformed response. A transformer disposed in the gateway is used to transform also the short message to be transmitted to correspond to the standard of the second mobile communication system, and the acknowledgement received in conjunction with the transmission of the short message is transformed to correspond to the standard of the first mobile communication system. This acknowledgement may be, e.g. a short informative message to the sender.

In the short message transmission system in the gateway there is also a temporary database arranged which comprises information about the mobile services switching centre of a subscriber of another mobile communication system, usually the address of the mobile services switching centre in whose area the subscriber at the moment of the previous routing data inquiry was located. One possibility of arranging the database is to maintain a temporary subscriber-specific database, which maintains information about the mobile services switching centre of the subscriber long enough.

Another possibility is to return information in the address field that unambiguously identifies the transaction. This is herein used to mean the address to which the short message service centre sends the short message. So from the point of view of the gateway, two independent transactions between the home location register of the first mobile communication system and the gateway may be unambiguously correlated.

As compared with prior art, the invention provides the advantage that it makes it possible to transmit short messages between mobile stations based on different standards. Although the transmission of short messages in different standards is actually very similar, they are, however, not compatible. The invention enables one to arrange this compatibility, i.e. implement the roaming functionality of short messages.

### BRIEF DESCRIPTION OF THE DRAWINGS

In the following section, the invention will be described by the aid of the accompanying examples of its embodiments with reference to the accompanying drawing, in which
Fig. 1 schematically represents one embodiment of the system in accordance with the invention;
Fig. 2 is one advantageous signaling diagram illustrating the function of the present invention;
Fig. 3 is another advantageous signaling diagram illustrating the function of the present invention.

### DETAILED DESCRIPTION OF THE INVENTION

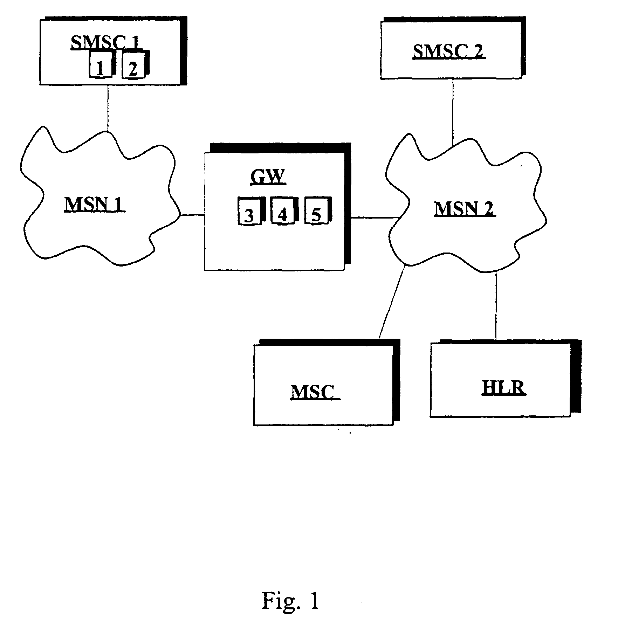

Fig. 1 represents one embodiment of the telecommunication system in accordance with the invention. The telecommunication system comprises a first mobile communication system MSN1, a first short message service centre SMSC 1, a gateway GW, a second mobile communication system MSN2, a home location register HLR, a second short message service centre SMSC 2 and a mobile services switching centre MSC.

The first mobile communication system is, e.g. a system consistent with the GSM standard that takes care of the normal functions of a mobile communication network.

The router 1 of the first short message service centre SMSC1 is used to make a routing data inquiry to the gateway GW, based on a predetermined numerical space in which there are one or more numbers of the second short message service centre SMSC2 corresponding to a certain numerical space of the standard of the second mobile communication system. The first short message service centre SMSC1 is also used to receive from the gateway GW the response to the inquiry which includes the address of the gateway based on which the short message is transmitted to the gateway to be transmitted further to the second mobile communication system MSN2. The first short message service centre SMSC1 also receives the acknowledgement of the transmission of the short message and transmits it further on.

In this invention, the gateway GW is responsible for arranging the roaming functionality, i.e. functions as a connective component between different mobile communication standards. The gateway GW comprises an inquiry returner 3 for returning its own address in response to the HLR inquiry made by the first short message service centre SMSC1. since the HLR inquiry is made based on the subscriber number, in the GSM, the inquiry is made based on the MSISDN, the operator has configured the network in such a way that the routing, i.e. HLR inquiries made to a subscriber numerical space of another standard, e.g. of an ANSI41 operator, are routed to the gateway GW.

The gateway GW comprises a transformer 4 for transforming the HLR inquiry made by the aforementioned first short message service centre SMSC1 into an inquiry consistent with the standard of the second mobile communication system MSN2. Likewise, the aforementioned transformer is used to transform the address of the mobile services switching centre MSC of the second mobile communication system MNS2 received in response to the aforementioned inquiry to correspond to the standard of the first mobile communication system MSN1, and the short message to be sent is transformed to correspond to the mobile communication standard of the second communication system MSN2. In the transformation, e.g. the settings of the GSM format are set to correspond to the settings of the ANSI41 format. In addition, the transformer installed in the gateway GW transforms the transmission acknowledgement of a message coming from the second short message service centre SMSC2 or mobile services switching centre to correspond to the standard of the first mobile communication system MSN1.

In the gateway GW there is also a database 5 arranged that comprises information about the mobile services switching centre MSC of the second mobile communication system MSN2. To the database of the gateway GW, the address of the mobile services switching centre is saved in whose area the subscriber at the moment of the inquiry was located.

The second mobile communication system MSN2 is, e.g. a mobile communication system consistent with the standard ANSI41 that correspondingly takes care of the normal functions of the mobile communication network in accordance with the rules consistent with its own standard.

The HLR inquiries coming from the gateway are received into the home location register HLR, and to the response, the address of the mobile services switching centre MSC of the subscriber of the second mobile communication system MSN2 is attached as a piece of routing data.

From the mobile services switching centre MSC of the second mobile communication system MSN2, or alternatively from the second short message service centre SMSC2, an acknowledgement is transmitted of the transmission of the short message to the gateway GW.

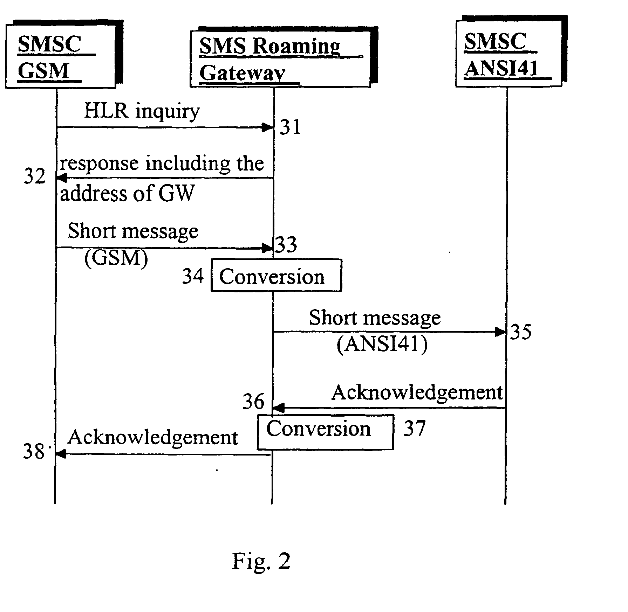

Fig. 2 is an example of a signaling diagram that represents one advantageous signaling in accordance with the invention. The first short message service centre SMSC1 makes a routing data inquiry based on the subscriber number, step 31. The gateway GW receives the inquiry and attaches to the response the address of the gateway, step 32. In a normal procedure, the home location register HLR would return the address of the mobile services switching centre MSC in whose area the subscriber is located. The short message service centre SMSC1 of the first mobile communication system MSN1 sends the short message to the gateway GW, step 33. The gateway receives the aforementioned short message and transforms the short message to correspond to the MSN2 standard of the second mobile communication system, e.g. the ANSI41 standard, step 34. In this transformation, it must be noticed that the short message is transformed at the same time from the Mobile Terminated form into a Mobile Originated from so that the second short message service centre SMSC2 receiving the message can handle the message in the right way.

The transformed short message is directed to the short message service centre SMSC2 of the second mobile communication system MSN2 to be transmitted further on, step 35. It is most reasonable to configure the address of the short message service centre SMSC2 of the second mobile communication system MSN2 in a subscriber-specific way, i.e. there are one or more numbers of the short message service centre SMSC2 of the second mobile communication system MSN2 corresponding to a certain numerical space. This implementation may be used to implement such a function in which the short messages of a subscriber of a particular operator are always transmitted to the short message service centre of the relevant operator. The store-and-forward functionality characteristic of a short message is in that case implemented in the short message service centre SMSC2 of a second mobile communication system, e.g. of an ANSI41 operator. In this implementation, it must also be noticed that the operator of second mobile communication system MSN2, e.g. an ANSI41 operator, must allow that, e.g. the clients of a GSM operator use their short message service centre. Typically, only the clients of the operator's own use the short message service centre of the operator concerned.

From the short message service centre SMSC2 of the second mobile communication system MSN2, an acknowledgement of the transmission of the message is sent, step 36. The acknowledgement is transformed in the gateway GW to correspond to the standard of the first mobile communication system MSN1, step 37. The acknowledgement is received into the first short message service centre SMSC1 to be transmitted further on, step 38.

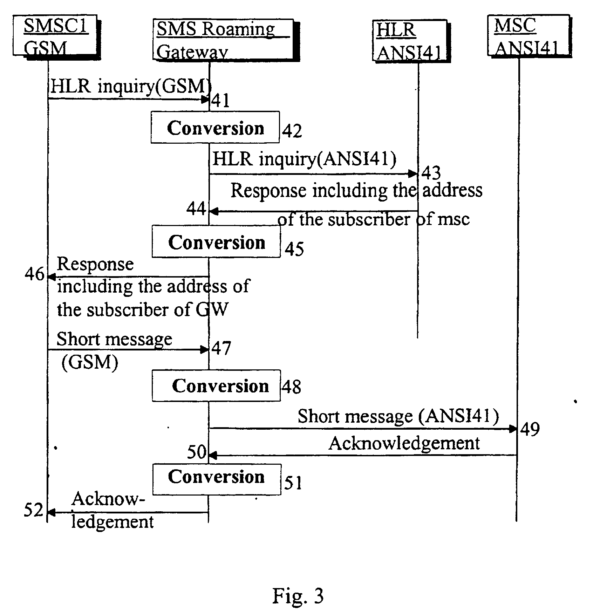

Fig. 3 represents another example of a signaling diagram illustrating the function of the present invention. Also in this example a HLR inquiry is made from the short message service centre SMSC1 of the first mobile communication system MSN1, step 41. The aforementioned inquiry is transformed by the transformer of the gateway to correspond to the second mobile communication standard, step 42. The inquiry is directed from the gateway GW to the home location register HLR of the second mobile communication system MSN2, step 43. To the response, the address of the mobile services switching centre MSC of the subscriber is attached, and it is sent to the gateway GW, step 44. In the gateway, the address is transformed to correspond to the standard of the first mobile communication system MSN1, step 45. The aforementioned transformed address is sent to the first short message service centre SMSC1 and it includes the address of the gateway, step 46.

Now that the location of the subscriber is known, a short message may be sent from the first short message service centre SMSC1 to the gateway GW, step 47. In the gateway, the aforementioned message is transformed to correspond, e.g. to the ANSI41 standard, step 48. At this point, the gateway GW utilizes its own database and returns from the database the address of the mobile services switching centre MSC in whose area the subscriber at the moment of the previous HLR inquiry was located.

There are several such methods by means of which a saved piece of data is correlated to a received short message. One possibility is to maintain a temporary subscriber-specific database which maintains information about the mobile services switching centre MSC of the subscriber long enough. Another possibility is to return, e.g. in the address field of a response message to a HLR inquiry information which unambiguously identifies the transaction. In this connection it is worth emphasizing the fact that the address is used to mean the address to which the first short message service centre SMSC1 sends the short message. So from the point of view of the gateway GW it is possible to unambiguously correlate two independent transactions, e.g. between the home location register HLR of a GSM standard and the gateway.

When the gateway GW has transformed the aforementioned short message to correspond to the standard of the second mobile communication system MSN2, the aforementioned short message is sent to the mobile services switching centre MSC of the second mobile communication system, step 49. An acknowledgement of the transmission of the short message is sent from the aforementioned mobile services switching centre MSC, step 50. The acknowledgement is transformed in the gateway to correspond to the standard of the first mobile communication system MSN1 and it is directed to the first short message service centre SMSC1 to be transmitted further on, step 51.

The invention is not restricted merely to the examples of its embodiments referred to above, instead many variations are possible within the scope of the inventive idea defined by the claims.

## Claims

1. A method for transmitting short messages between mobile communication systems in a telecommunication system comprising:
a first mobile communication system (MSN1) which is based on a first mobile communication standard;
a first short message service centre (SMSC1) which is connected to the aforementioned mobile communication system (MSN1);
a second mobile communication system (MSN2) which is based on a second mobile communication standard;
a second short message service centre (SMSC2) which is connected to the aforementioned second mobile communication system (MSN2);
a home location register (HLR) which is connected to the aforementioned second mobile communication system (MSN2); and
a mobile services switching centre (MSC) which is connected to the aforementioned second mobile communication system (MSN2); and
a gateway (GW) which connects the aforementioned first (MSN1) and second mobile communication system (MSN2),
which method comprises the steps of:
receiving a short message into the aforementioned first short message service centre (SMSC1);
making a routing data inquiry by the aforementioned first short message service centre (SMSC1) ;
**characterized in that** the method comprises the steps of:
addressing the routing data inquiries addressed to a predetermined numerical space to the gateway (GW), one or more numbers of the second short message service centre (SMSC2) set to correspond to said predetermined numerical space;
returning the address of the gateway (GW) from the aforementioned gateway (GW) to the aforementioned routing data inquiry;
routing the aforementioned short message to the aforementioned gateway (GW);
transforming the short message received into the aforementioned gateway (GW) to correspond to the second mobile communication standard; and
transmitting the aforementioned short message from the aforementioned gateway (GW) to the aforementioned second short message service centre (SMSC2) to be transmitted further on.

2. A method as defined in claim 1, **characterized in that** the method further comprises the steps of:
transmitting an acknowledgement of the transmission of the aforementioned short message from the aforementioned second short message service centre (SMSC2) to the aforementioned gateway (GW);
transforming the aforementioned acknowledgement in the aforementioned gateway (GW) to correspond to the first mobile communication standard; and
directing the aforementioned acknowledgement from the aforementioned gateway (GW) to the aforementioned first short message service centre (SMSC1) to be transmitted further on.

3. A method as defined in claim 1, **characterized in that** the method further comprises the steps of:
transforming in the aforementioned gateway (GW) the routing data inquiry made by the first short message service centre (SMSC1) into a routing data inquiry consistent with the second mobile communication standard;
directing the aforementioned routing data inquiry to the aforementioned home location register (HLR) ;
receiving the aforementioned routing data inquiry into the aforementioned home location register (HLR) ;
returning to the aforementioned gateway (GW) the address of the aforementioned mobile services switching centre (MSC) in whose area the recipient of the short message is located;
transforming the aforementioned address to correspond to the first mobile communication standard; and
sending the aforementioned transformed address of the mobile services switching centre (MSC) to the aforementioned first short message service centre (SMSC1);
sending the aforementioned short message to the aforementioned gateway (GW);
transforming the aforementioned short message in the aforementioned gateway (GW) to correspond to the second mobile communication standard;
transmitting the aforementioned short message to the aforementioned mobile services switching centre (MSC) to be transmitted further on;
sending an acknowledgement of the transmission of the aforementioned short message from the aforementioned mobile services switching centre (MSC);
transforming the aforementioned acknowledgement in the aforementioned gateway (GW) to correspond to the first mobile communication standard.

4. A method as defined in claim 1 or 3, **characterized in that** in the method:
a temporary database is maintained in the aforementioned gateway (GW) that includes information for the identification of transactions.

5. A method as defined in claim 2 or 3, **characterized in that** in the method:
the aforementioned short message is transformed from a Mobile Terminating form into a Mobile Originated form.

6. A system for transmitting short messages between mobile communication systems in a telecommunication system comprising:
a first mobile communication system (MSN1) which is based on a first mobile communication standard;
a first short message service centre (SMSC1) which is connected to the aforementioned first mobile communication system (MSN1) ;
a second mobile communication system (MSN2) which is based on a second mobile communication standard;
a second short message service centre (SMSC2) which is connected to the aforementioned second mobile communication system (MSN2);
a home location register (HLR) which is connected to the aforementioned second mobile communication system (MSN2); and
a mobile services switching centre (MSC) which is connected to the aforementioned second mobile communication system (MSN2), and
a gateway (GW) which connects the aforementioned first (MSN1) and second mobile communication system (MSN2),
which system comprises:
a routing component (1) which is used to make a routing data inquiry from the aforementioned first short message service centre (SMSC1), and the short message is transmitted based on the aforementioned routing data inquiry further to the aforementioned second mobile communication system (MSN2), **characterized in that** the system further comprises:
a pointer (2) which is used to address the routing data inquiries addressed to a predetermined numerical space to the gateway, one or more numbers of the second short message service centre (SMSC2) set to correspond to said predetermined numerical space;
an inquiry returner (3) which is used to return the address of the gateway (GW) from the gateway (GW) to the aforementioned routing data inquiry in order to route the aforementioned short message to the aforementioned gateway (GW);
a transformer (4) for transforming in the aforementioned gateway (GW) the aforementioned routing data inquiries, short messages to be transmitted and acknowledgements of transmissions to correspond to the right mobile communication standard; and **in that**
the aforementioned gateway (GW) is further arranged to transmit the aforementioned short message to the aforementioned second short message service centre (SMSC2) to be transmitted further on.

7. A system as defined in claim 6, **characterized in that** the system further comprises a database (5) which includes information for the identification of transactions.

## Patentansprüche

1. Verfahren zum Übertragen von Kurzmitteilungen zwischen mobilen Kommunikationssystemen innerhalb eines Telekommunikationssystems, umfassend:
ein erstes mobiles Kommunikationssystem (MSN1), das auf einer ersten Mobilkommunikationsnorm basiert;
ein erstes, im Folgenden als SMS-Zentrum bezeichnetes Kurzmitteilungsdienst-Zentrum (SMSC1), das an das erwähnte Mobilkommunikationssystem (MSN1) angeschlossen ist;
ein zweites Mobilkommunikationssystem (MSN2), das auf einer zweiten Mobilkommunikationsnorm basiert;
ein zweites SMS-Zentrum (SMSC2), welches an das zweite Mobilkominunikationssystem (MSN2) angeschlossen ist;
ein Heimatregister (HLR), welches an das zweite Mobilkommunikationssystem (MSN2) angeschlossen ist; und
eine Mobildienst-Wählvermittlung (MSC), die an das zweite Mobilkommunikatiossystem (MSN2) angeschlossen ist; und
ein Gateway (GW), welches das erste (MSN1), und das zweite Mobilkommunikationssystem (MSN2) miteinander verbindet;
umfassend folgende Schritte:
Empfangen einer Kurzmitteilung in dem ersten SMS-Zentrum (SMSC1);
Absetzen einer Leitdatenabfrage durch das erste SMS-Zentrum (SMSC1);
**dadurch gekennzeichnet, dass** das Verfahren folgende Schritte beinhaltet:
Adressieren der an einen vorbestimmten numerischen Raum adressierten Leitdatenabfragen an das Gateway (GW), wobei eine oder mehrere Zahlen des zweiten SMS-Zentrums (SMSC2) so eingestellt sind, dass sie dem vorbestimmten numerischen Raum entsprechen;
Zurückgeben der Adresse des Gateways (GW) von dem vorgenannten Gateway (GW) zu der erwähnten Leitdatenabfrage;
Leiten der Kurzmitteilung zu dem Gateway (GW);
Umsetzen der in dem Gateway (GW) empfangenen Kurzmitteilung in der Weise, dass diese der zweiten Mobilkommunikationsnorm entspricht; und
Senden der Kurzmitteilung von dem Gateway (GW) zu dem zweiten SMS-Zentrum (SMSC2), um weiter übertragen zu werden.

2. Verfahren nach Anspruch 1, **dadurch gekennzeichnet, dass** es weiterhin folgende Schritte beinhaltet:
Senden einer Bestätigung der Übertragung der Kurzmitteilung aus dem zweiten SMS-Zentrum (SMSC2) zu dem Gateway (GW);
Umsetzen der Bestätigung in dem Gateway (GW) derart, dass sie der ersten Mobilkommunikationsnorm entspricht; und
Leiten der Bestätigung von dem Gateway (GW) zu dem ersten SMS-Zentrum (SMSC1), um weiter übertragen zu werden:

3. Verfahren nach Anspruch 1, **dadurch gekennzeichnet, dass** es folgende Schritte beinhaltet:
Umsetzen der von dem ersten SMS-Zentrum (SMSC1) abgesetzten Leitdatenabfrage innerhalb des Gateways (GW) in eine Leitdatenabfrage, die mit der zweiten Mobilkommunikationsnorm konsistent ist;
Leiten der Leitdatenabfrage zu dem Heimatregister (HLR);
Empfangen der Leitdatenabfrage in dem Heimatregister (HLR);
Zurückgeben der Adresse der Mobildienst-Wählvermittlung (MSC), in dessen Bereich sich der Empfänger der Kurzmitteilung befindet, zu dem Gateway (GW);
Umsetzen der Adresse in der Weise, dass sie der ersten Mobilkommunikationsnorm entspricht; und
Senden der umgesetzten Adresse der Mobildienst-Wählvermittlung (MSC) zu dem ersten SMS-Zentrum (SMSC1); und
Senden der Kurzmitteilung zu dem Gateway (GW);
Umsetzen der Kurzmitteilung in dem Gateway (GW) derart, dass sie der zweiten Mobilkommunikationsnorm entspricht;
Senden der Kurzmitteilung zu der Mobildienst-Wählvermittlung (MSC), um weiter übertragen zu werden;
Senden einer Bestätigung der Übertragung der Kurzmitteilung aus der Mobildienst-Wählvermittlung (MSC);
Umsetzen der Bestätigung in dem Gateway (GW) derart, dass sie der ersten Mobilkommunikationsnorm entspricht.

4. Verfahren nach Anspruch 1 oder 3,
**dadurch gekennzeichnet, dass** in dem Gateway (GW) eine Zwischendatenbank geführt wird, die Kennungsinformationen für Transaktionen enthält.

5. Verfahren nach Anspruch 2 oder 3, **dadurch gekennzeichnet,dass** die Kurzmitteilung aus der Form für Mobil-Eingang umgesetzt wird in eine Form für Mobil-Abgang.

6. System zum Übertragen von Kurzmitteilungen zwischen Mobilkommunikationssystemen innerhalb eines Telekommunikationssystems, umfassend:
ein erstes mobiles Kommunikationssystem (MSN1), das auf einer ersten Mobilkommunikationsnorm basiert;
ein erstes, im Folgenden als SMS-Zentrum bezeichnetes Kurzmitteilungsdienst-Zentrum (SMSC1), das an das erwähnte Mobilkommunikationssystem (MSN1) angeschlossen ist;
ein zweites Mobilkommunikationssystem (MSN2), das auf einer zweiten Mobilkommunikationsnorm basiert;
ein zweites SMS-Zentrum (SMSC2), welches an das zweite Mobilkommunikationssystem (MSN2) angeschlossen ist;
ein Heimatregister (HLR), welches an das zweite Mobilkommunikationssystem (MSN2) angeschlossen ist; und
eine Mobildienst-Wählvermittlung (MSC), die an das zweite Mobilkommunikatiossystem (MSN2) angeschlossen ist; und
ein Gateway (GW), welches das erste (MSN1), und das zweite Mobilkommunikationssystem (MSN2) miteinander verbindet;
umfassend:
eine Leitkomponente (1), die dazu benutzt wird, eine Leitdatenabfrage von dem ersten SMS-Zentrum (SMSC1) abzusetzen, wobei die Kurzmitteilung basierend auf der Leitdatenabfrage weiter übertragen wird zu dem zweiten Mobilkommunikationssystem (MSN2), **dadurch gekennzeichnet, dass** das System weiterhin aufweist:
einen Zeiger (2), der dazu dient, die an einen vorbestimmten numerischen Raum adressierten Leitdatenabfragen an das Gateway zu adressieren, wobei
eine oder mehrere Zahlen des zweiten SMS-Zentrums (SMSC2) so eingestellt sind, dass sie dem vorbestimmten numerischen Raum entsprechen;
einen Abfragerückgeber (3), der dazu dient, die Adresse des Gateways (GW) von dem Gateway (GW) zu der Leitdatenabfrage zurückzugeben, um die Kurzmitteilung zu dem Gateway (GW) zu leiten;
einen Umsetzer (4) zum Umsetzen der Leitdatenabfragen, zu sendenden Kurzmitteilungen und Sende-Bestätigungen innerhalb des Gateways (GW) derart, dass diese der passenden Mobilkommunikationsnorm entsprechen, und dass
das Gateway (GW) weiterhin derart ausgebildet ist, dass die Kurzmitteilung zu dem zweiten SMS-Zentrum (SMSC1) gesendet wird, um weiter übertragen zu werden.

7. System nach Anspruch 6, **dadurch gekennzeichnet, dass** es eine Datenbank (5) aufweist, welche Informationen über Transaktions-Kennung beinhaltet.

## Revendications

1. Procédé pour transmettre des messages courts entre des systèmes de communication mobile dans un système de télécommunication comprenant :
un premier système de communication mobile (MSN1) qui est basé sur un premier standard de communication mobile ;
un premier centre de service de messages courts (SMSC1) qui est connecté au système de communication mobile (MSN1) susmentionné ;
un deuxième système de communication mobile (MSN2) qui est basé sur un deuxième standard de communication mobile ;
un deuxième centre de service dé messages courts (SMSC2) qui est connecté au deuxième système de communication mobile (MSN2) susmentionné ;
un registre des abonnés nominaux (HLR) qui est connecté au deuxième système de communication mobile (MSN2) susmentionné ; et
un centre de commutation du service mobile (MSC) qui est connecté au deuxième système de communication mobile (MSN2) susmentionné ; et
une passerelle (GW) qui connecte les premier (MSN1) et deuxième (MSN2) systèmes de communication mobile susmentionnés,
lequel procédé comprend les étapes consistant à :
recevoir un message court dans le premier centre de service de messages courts (SMSC1) susmentionné ;
effectuer une requête de données de routage par le premier centre de service de messages courts (SMSC1) susmentionné;
**caractérisé en ce que** le procédé comprend les étapes consistant à :
adresser, à la passerelle (GW), les requêtes de données de routage adressées à un espace numérique prédéterminé, un ou plusieurs numéros du deuxième centre de service de messages courts (SMSC2) étant définis pour correspondre audit espace numérique prédéterminé ;
renvoyer l'adresse de la passerelle (GW) de la passerelle (GW) susmentionnée à la requêtes de données de routage susmentionnée ;
acheminer le message court susmentionné vers la passerelle (GW) susmentionnée ;
transformer le message court reçu dans la passerelle (GW) susmentionnée afin qu'il corresponde au deuxième standard de communication mobile ; et
transmettre le message court susmentionné de la passerelle (GW) susmentionnée au deuxième centre de service de messages courts (SMSC2) susmentionné afin qu'il soit transmis plus loin.

2. Procédé selon la revendication 1, **caractérisé en ce que** le procédé comprend, en outre, les étapes consistant à :
transmettre un acquittement de la transmission du message court susmentionné du deuxième centre de service de messages courts (SMSC2) susmentionné à la passerelle (GW) susmentionnée ;
transformer l'acquittement susmentionné dans la passerelle (GW) susmentionnée afin qu'il corresponde au premier standard de communication mobile ; et
diriger l'acquittement susmentionné de la passerelle (GW) susmentionnée vers le premier centre de service de messages courts (SMSC1) susmentionné afin qu'il soit transmis plus loin.

3. Procédé selon la revendication 1, **caractérisé en ce que** le procédé comprend, en outre, les étapes consistant à :
transformer, dans la passerelle (GW) susmentionnée, la requête de données de routage effectuée par le premier centre de service de messages courts (SMSC1) en une demande de données de routage compatible avec le deuxième standard de communication mobile ;
diriger la requête de données de routage susmentionnée vers le registre des abonnés nominaux (HLR) susmentionné ;
recevoir la requête de données de routage susmentionnée dans le registre des abonnés nominaux (HLR) susmentionné ;
renvoyer, à la passerelle (GW) susmentionnée, l'adresse du centre de commutation du service mobile (MSC) susmentionné dans la zone duquel le destinataire du message court est situé ;
transformer l'adresse susmentionnée afin qu'elle corresponde au premier standard de communication mobile ; et
envoyer l'adresse transformée susmentionnée du centre de commutation du service mobile (MSC) au premier centre de service de messages courts (SMSC1) susmentionné ;
envoyer le message court susmentionné à la passerelle (GW) susmentionnée ;
transformer le message court susmentionné dans la passerelle (GW) susmentionnée afin qu'il corresponde au deuxième standard de communication mobile ;
transmettre le message court susmentionné au centre de commutation du service mobile (MSC) susmentionné afin qu'il soit transmis plus loin ;
envoyer un acquittement de la transmission du message court susmentionné à partir du centre de commutation du service mobile (MSC) susmentionné ;
transformer l'acquittement susmentionné dans la passerelle (GW) susmentionnée afin qu'il corresponde au premier standard de communication mobile.

4. Procédé selon la revendication 1 ou 3, **caractérisé en ce que**, dans le procédé :
une base de données temporaire qui comprend des informations pour l'identification de transactions est maintenue dans la passerelle (GW) susmentionnée.

5. Procédé selon la revendication 2 ou 3, **caractérisé en ce que**, dans le procédé :
le message court susmentionné est transformé d'une forme Aboutissant à un Mobile en une forme Provenant d'un Mobile.

6. Système pour transmettre des messages courts entre des systèmes de communication mobile dans un système de télécommunication comprenant :
un premier système de communication mobile (MSN1) qui est basé sur un premier standard de communication mobile ;
un premier centre de service de messages courts (SMSC1) qui est connecté au premier système de communication mobile (MSN1) susmentionné ;
un deuxième système de communication mobile (MSN2) qui est basé sur un deuxième standard de communication mobile ;
un deuxième centre de service de messages courts (SMSC2) qui est connecté au deuxième système de communication mobile (MSN2) susmentionné ;
un registre des abonnés nominaux (HLR) qui est connecté au deuxième système de communication mobile (MSN2) susmentionné ; et
un centre de commutation du service mobile (MSC) qui est connecté au deuxième système de communication mobile (MSN2) susmentionné ; et
une passerelle (GW) qui connecte les premier (MSN1) et deuxième (MSN2) systèmes de communication mobile susmentionnés,
lequel système comprend :
un composant de routage (1) qui est utilisé pour effectuer une requête de données dé routage à partir du premier centre de service de messages courts (SMSC1) susmentionné, et le message court est transmis sur la base de la requête de données de routage susmentionnée plus loin vers ce deuxième système de communication mobile (MSN2) susmentionné, **caractérisé en ce que** le système comprend en outre :
un pointeur (2) qui est utilisé pour adresser, à la passerelle (GW), les requêtes de données de routage adressées à un espace numérique prédéterminé, un ou plusieurs numéros du deuxième centre de service de messages courts (SMSC2) étant définis pour correspondre audit espace numérique prédéterminé ;
un dispositif de renvoi de requête (3) qui est utilisé pour renvoyer l'adresse de la passerelle (GW) de la passerelle (GW) à la requête de données de routage susmentionnée afin d'acheminer le message court susmentionné vers la passerelle (GW) susmentionnée ;
un dispositif de transformation (4) pour transformer, dans la passerelle (GW) susmentionnée, les requêtes de données de routage, les messages courts à transmettre et les acquittements de transmissions susmentionnés afin qu'ils correspondent au standard approprié de communication mobile ; et **en ce que**
la passerelle (GW) susmentionnée est, en outre, agencée pour transmettre le message court susmentionné au deuxième centre de service de messages courts (SMSC2) susmentionné afin qu'il soit transmis plus loin.

7. Système selon la revendication 6, **caractérisé en ce que** le système comprend, en outre, une base de données (5) qui comprend des informations pour l'identification de transactions.
